# EUROPEAN PATENT SPECIFICATION

(11) **EP 4 571 935 B1**
(45) Date of publication and mention of the grant of the patent: **16.09.2026**
(21) Application number: 24212875.9
(22) Date of filing: 14.11.2024
(51) Int. Cl.: H01M 10/54, H01M 10/44, C22B 1/02, C22B 7/00, C22B 26/12, H01M 4/505, H01M 4/587, H01M 4/525, H01M 10/0525, H01M 10/42

(54) **RECYCLING METHOD FOR LITHIUM ION SECONDARY BATTERY**
RECYCLINGVERFAHREN FÜR LITHIUM-IONEN-SEKUNDÄRBATTERIE
PROCÉDÉ DE RECYCLAGE POUR BATTERIE SECONDAIRE AU LITHIUM-ION

(30) Priority: 14.12.2023 JP 2023210868
(43) Date of publication of application: 18.06.2025
(73) Proprietor: Prime Planet Energy & Solutions, Inc., Chuo-ku, Tokyo 103-0022 (JP)
(72) Inventor: OKUDA, Koji, Tokyo, 103-0022 (JP)
(74) Representative: Kuhnen & Wacker Patent- und Rechtsanwaltsbüro PartG mbB

(56) References cited:
- FAN MEI-CEN ET AL: "Lithium metal recycling from spent lithium-ion batteries by cathode overcharging process", RARE METALS - XIYOU JINSHU, PRESS OF METALLURGICAL INDUSTRY, BEIJING, CN, vol. 41, no. 6, 21 February 2022 (2022-02-21), pages 1843 - 1850, XP037803639, ISSN: 1001-0521, [retrieved on 20220221], DOI: 10.1007/S12598-021-01918-7
- E ASADI DALINI ET AL: "A Review on Environmental, Economic and Hydrometallurgical Processes of Recycling Spent Lithium-ion Batteries", MINERAL PROCESSING AND EXTRACTIVE METALLURGY REVIEW, 13 July 2020 (2020-07-13), US, pages 1 - 22, XP055751035, ISSN: 0882-7508, DOI: 10.1080/08827508.2020.1781628

## Description

### TECHNICAL FIELD

The present invention relates to a recycling method for a lithium ion secondary battery.

### BACKGROUND

Lithium ion secondary batteries have been used widely in various fields. The lithium ion secondary battery includes various materials including valuable metals such as Ni and Co. For example, for a positive electrode active material, a lithium transition metal composite oxide such as a lithium nickel composite oxide, a lithium cobalt composite oxide, a lithium nickel cobalt composite oxide, or a lithium nickel cobalt manganese composite oxide is used. For a positive electrode core body, aluminum or the like is used. On the other hand, a carbon material or the like is used for a negative electrode active material. For a negative electrode core body, copper or the like is used. Additionally, aluminum or the like is used for a battery case that accommodates these electrodes.

In recent years, development of recycling techniques for collecting valuable metals from the used lithium ion secondary batteries and reusing the collected valuable metals as battery materials has advanced. In the recycling technique, first, the used lithium ion secondary battery is roasted. From the roasted lithium ion secondary battery, a black powder body containing valuable metals of a positive electrode active material (this powder body is so-called black mass) is collected and the black mass is subjected to acid leaching. Thus, a metal solution in which metal components in the black mass (Li, Ni, Co, Mn, Al, Cu, and the like) are dissolved in an acid solution can be obtained. In addition, by this acid leaching, a carbon component in the black mass can be separated. On the other hand, the metal solution after the acid leaching is subjected to various separating processes (neutralization precipitation, solvent extraction, etc.). Thus, a desired metal component can be extracted and reused as the battery material.

Examples of such a recycling technique are disclosed in the following Patent Documents 1 to 3. According to these patent literatures, in the recycling of a lithium ion secondary battery, the lithium ion secondary battery is discharged first. Moreover, Non-Patent Document 1 discloses a lithium metal recycling method from spent lithium-ion batteries according to the prior art.

### CITATION LIST

Patent Document 1: JP 2022-163095 A
Patent Document 2: JP 2021-072157 A
Patent Document 3: JP 2013-101830 A
Non-Patent Document 1: Fan et al., Rare Metals, 2022, 41(6), pages 1843 to 1850.

### SUMMARY

As a result of the present inventor's earnest examination, however, the conventional art has a problem that, for example, it requires long time to leach the metal component from the black mass into acid and the implementation efficiency in the process for recycling is not enough.

The art disclosed herein has been made in order to solve the above-described problem, and it is an object to provide a recycling method for a lithium ion secondary battery, which can improve the implementation efficiency.

A recycling method for a lithium ion secondary battery disclosed herein includes a Li precipitating step of performing pulse charging and discharging on a lithium ion secondary battery in a low temperature environment so that Li is precipitated on a negative electrode, and an active material breaking step of repeatedly charging and discharging the lithium ion secondary battery in a range where a positive electrode is in a low potential region so that a positive electrode active material is broken, wherein the low temperature environment is a temperature environment of -30 °C to 10 °C, at the pulse charging and discharging, a current value is 2.5 C to 200 C, in the active material breaking step, the lithium ion secondary battery is repeatedly charged and discharged in a range where the positive electrode has a potential of 1.5 V (vs Li⁺/Li) to 3.7 V (vs Li⁺/Li), and in the active material breaking step, the lithium ion secondary battery is charged and discharged for five cycles or more.

With such a structure, the recycling method for a lithium ion secondary battery that can improve the implementation efficiency can be provided.

### BRIEF DESCRIPTION OF THE DRAWINGS

FIG. 1 is a flowchart representing steps of a recycling method for a lithium ion secondary battery according to one embodiment;
FIG. 2 is a longitudinal cross-sectional view schematically illustrating an internal structure of one example of a lithium ion secondary battery used in the recycling method for a lithium ion secondary battery according to this embodiment; and
FIG. 3 is a perspective view schematically illustrating an electrode body of the lithium ion secondary battery illustrated in FIG. 2.

### DETAILED DESCRIPTION

Embodiments of the present invention will hereinafter be described with reference to the drawings. Matters that are not mentioned in the present specification and that are necessary for the implementation of the present invention can be grasped as design matters of those skilled in the art based on the prior art in the relevant field. The present invention can be implemented on the basis of the contents disclosed in the present specification and common technical knowledge in the relevant field. It should be noted that in the drawings below, the members and parts with the same operation are explained by being denoted by the same reference sign. In addition, the size relation (length, width, thickness, etc.) in each drawing does not necessarily reflect the actual size relation. Moreover, in the present specification, the numerical range expressed as "A to B" includes A and B.

It should be noted that the term "secondary battery" in this specification refers to an electrical energy storage device capable of being charged and discharged repeatedly. It should be noted that, in the present specification, the term "lithium ion secondary battery" refers to a secondary battery that uses lithium ions as a charge carrier and can be charged and discharged by transfer of charges with the lithium ions between positive and negative electrodes.

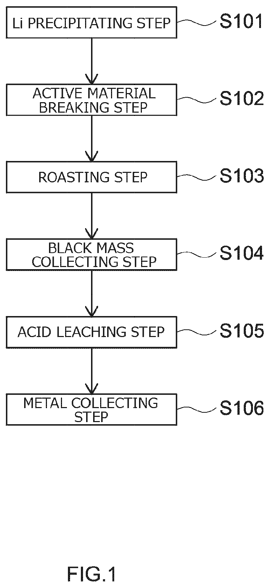

FIG. 1 is a flowchart representing steps of a recycling method for a lithium ion secondary battery according to this embodiment as one example of a recycling method for a lithium ion secondary battery according to the present invention. The recycling method for a lithium ion secondary battery according to this embodiment necessarily includes a Li precipitating step S101 of performing pulse charging and discharging on the lithium ion secondary battery in a low temperature environment so that Li is precipitated on a negative electrode, and an active material breaking step S102 of repeatedly charging and discharging the lithium ion secondary battery in a range where a positive electrode is in a low potential region so that a positive electrode active material is broken.

In the example represented in FIG. 1, the recycling method for a lithium ion secondary battery according to this embodiment further includes, as optional steps, a roasting step S103 of heating the lithium ion secondary battery after the active material breaking step S102 at a predetermined temperature, a black mass collecting step S104 of collecting black mass containing a constituent metal of the positive electrode active material from the lithium ion secondary battery after the roasting step S103, an acid leaching step S105 of immersing the obtained black mass in an acid solution to obtain an acid leachate containing the constituent metal of the positive electrode active material, and a metal collecting step S106 of separating and collecting the constituent metal of the positive electrode active material from the acid leachate.

That is to say, the Li precipitating step S101 and the active material breaking step S102 can be grasped as a pre-treatment method for a lithium ion secondary battery to be recycled. Therefore, in the recycling method for a lithium ion secondary battery according to this embodiment, the pre-treatment method for a lithium ion secondary battery to be recycled including the Li precipitating step S101 and the active material breaking step S102 is performed.

The recycling method for a lithium ion secondary battery according to this embodiment is applied mainly to material recycling. The recycling method according to this embodiment is typically, for example, used to obtain raw materials of the positive electrode active material and obtain raw materials of other constituent members of the lithium ion secondary battery by collecting the valuable metals such as transition metals (for example, Ni, Co, and Mn) from the lithium ion secondary battery. The contents of the recycling of the lithium ion secondary battery is, however, not limited to this. First, a specific example of the lithium ion secondary battery used in the recycling method according to this embodiment is described.

### 1. Lithium ion secondary battery

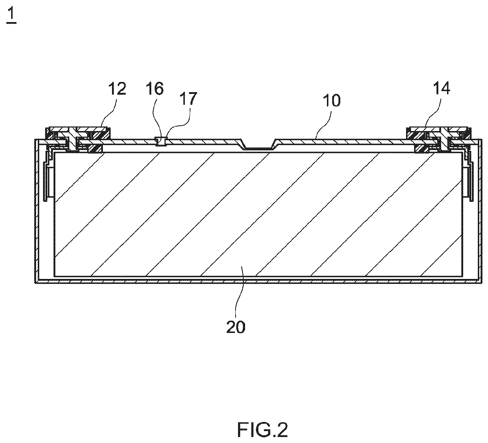

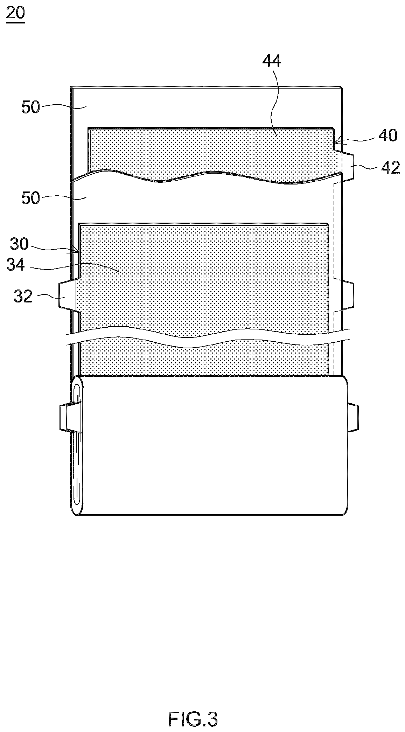

FIG. 2 is a longitudinal cross-sectional view schematically illustrating an internal structure of one example of a lithium ion secondary battery used in the recycling method according to this embodiment. FIG. 3 is a perspective view schematically illustrating an electrode body of the lithium ion secondary battery illustrated in FIG. 2. As illustrated in FIG. 2, a lithium ion secondary battery 1 includes an exterior body 10, an electrode body 20, and an electrolyte (not illustrated).

### (1) Exterior body

The exterior body is not limited in particular as long as it is a container that accommodates the electrode body and the electrolyte. For example, the exterior body 10 illustrated in FIG. 2 is a box-shaped case. This exterior body 10 in the box shape is formed of, for example, a metal material with a certain strength (such as aluminum (Al)). As illustrated in FIG. 2, the exterior body 10 has a positive electrode terminal 12 and a negative electrode terminal 14 attached thereto. The positive electrode terminal 12 and the negative electrode terminal 14 are connected to the electrode body 20 inside the exterior body 10. Specifically, the positive electrode terminal 12 is connected to a positive electrode plate 30 of the electrode body 20 (see FIG. 3). The positive electrode terminal 12 is formed of aluminum (Al) or the like. On the other hand, the negative electrode terminal 14 is connected to a negative electrode plate 40 of the electrode body 20. The negative electrode terminal 14 is formed of copper (Cu) or the like.

In addition, the exterior body 10 illustrated in FIG. 2 includes a liquid injection hole 16. This liquid injection hole 16 is an opening part that communicates between the inside and the outside of the exterior body 10. In the manufacture of the lithium ion secondary battery 1, the inside of the exterior body 10 is filled with an electrolyte solution through this liquid injection hole 16. Then, the liquid injection hole 16 is sealed by a sealing plug 17 after the filling with the electrolyte solution.

### (2) Electrode body

The electrode body 20 is an electrical energy generation element of the lithium ion secondary battery 1. As illustrated in FIG. 3, the electrode body 20 includes the positive electrode plate 30, the negative electrode plate 40, and a separator 50. It should be noted that the electrode body 20 illustrated in FIG. 3 is a wound electrode body. This wound electrode body is obtained by winding a long multilayer body with a band shape in which the positive electrode plate 30, the negative electrode plate 40, and the separator 50 are stacked. It should be noted that the structure of the electrode body 20 is not limited to the wound electrode body and may be another conventionally known structure (such as a stacked-type electrode body).

The positive electrode plate 30 includes a positive electrode core body 32 in a foil shape, and a positive electrode active material layer 34 provided on a surface of the positive electrode core body 32. The positive electrode core body 32 is formed of aluminum (Al) or the like. The positive electrode active material layer 34 is a mixture layer including the positive electrode active material, a conductive material, a binder, and the like. The positive electrode active material is a metal material containing at least lithium (Li). Examples of the positive electrode active material include lithium transition metal composite oxides such as a lithium nickel composite oxide, a lithium cobalt composite oxide, a lithium manganese composite oxide, a lithium nickel manganese composite oxide, a lithium manganese cobalt composite oxide, a lithium nickel cobalt composite oxide, a lithium nickel cobalt manganese composite oxide, and a lithium nickel cobalt aluminum composite oxide. Other examples of the positive electrode active material include lithium transition metal phosphate compounds such as lithium iron phosphate, lithium manganese phosphate, and lithium manganese iron phosphate. As the conductive material, carbon materials such as acetylene black and graphite are given. As the binder, resin materials such as polyvinylidene fluoride (PVdF) are given.

From the viewpoint of easy breaking of the positive electrode active material, the crystal structure of the positive electrode active material is desirably a layered structure. As the positive electrode active material, a lithium nickel cobalt manganese composite oxide and a lithium nickel cobalt aluminum composite oxide are desirable and a lithium nickel cobalt manganese composite oxide is more desirable.

On the other hand, the negative electrode plate 40 includes a negative electrode core body 42 in a foil shape and a negative electrode active material layer 44 provided on a surface of the negative electrode core body 42. The negative electrode core body 42 is formed of copper (Cu) or the like. The negative electrode active material layer 44 is a mixture layer including a negative electrode active material, a binder, a thickener, and the like. Examples of the negative electrode active material include graphite. Graphite may be either natural graphite or artificial graphite, and may be amorphous carbon coated graphite in which graphite is coated with an amorphous carbon material. Other examples of the negative electrode active material include hard carbon, soft carbon, and other carbon materials. In addition, other examples of the negative electrode active material include lithium titanate (LTO), silicon carbide (SiC), a composite material containing carbon and silicon, silicon oxide (SiOx), and the like. As the binder, styrene butadiene rubber (SBR) or the like is used. As the thickener, carboxymethyl cellulose (CMC) or the like is used.

The separator 50 is an insulating sheet interposed between the positive electrode plate 30 and the negative electrode plate 40. For this separator 50, for example, a resin material such as polyethylene (PE), polypropylene (PP), polyester, cellulose, or polyamide is used. In addition, on a surface of the separator 50, a heat resistant layer including inorganic filler may be formed. Examples of such inorganic filler include inorganic oxides such as aluminum oxide, magnesium oxide, silicon oxide, and titanium oxide, nitrides such as aluminum nitride and silicon nitride, metal hydroxide such as calcium hydroxide, magnesium hydroxide, and aluminum hydroxide, clay minerals such as mica, talc, boehmite, zeolite, apatite, and kaolin, and the like.

### (3) Electrolyte

In this lithium ion secondary battery 1, the electrolyte exists between the positive electrode plate 30 and the negative electrode plate 40. Thus, charge carriers (Li ions) can be transferred between the positive electrode plate 30 and the negative electrode plate 40. It should be noted that the mode of the electrolyte does not limit the art disclosed herein and any conventionally known mode can be employed without particular limitations. Examples of the mode of such an electrolyte include a nonaqueous electrolyte solution, a gel electrolyte, a solid electrolyte, and the like.

The lithium ion secondary battery 1 is desirably used for vehicles (that is, for a driving power source of a vehicle such as a battery electric vehicle (BEV), a hybrid electric vehicle (HEV), or a plug-in hybrid vehicle (PHEV)); however, the present invention is not limited to this. The lithium ion secondary battery 1 may be used for a power source of an electronic appliance or the like.

### 2. Recycling method for lithium ion secondary battery

Each step of the recycling method for a lithium ion secondary battery according to this embodiment will hereinafter be described in detail. As shown in FIG. 1, the recycling method for a lithium ion secondary battery according to this embodiment includes the Li precipitating step S101 and the active material breaking step S102 as the necessary steps, and includes the roasting step S103, the black mass collecting step S104, the acid leaching step S105, and the metal collecting step S106 as the optional steps.

In this manner, in the recycling method according to this embodiment, the Li precipitating step S101 and the active material breaking step S102 are performed first. In the present specification, the breakage of the positive electrode active material refers to miniaturization of particles of the positive electrode active material due to crack or the like (that is, the decrease in particle diameter (specifically, median diameter D50 measured by laser diffraction/scattering method)).

Here, in the case of charging and discharging the lithium ion secondary battery in the low potential region of the positive electrode, the crystal size changes due to intercalation and deintercalation of Li to and from the positive electrode active material. Therefore, by repeating the charging and discharging in the low potential region of the positive electrode, the crystal structure of the positive electrode active material can be broken using the change in crystal size and thereby, the particles can be cracked, for example.

However, in the case of using the lithium ion secondary battery for a long time, Li ions released from the positive electrode active material are fixed in the negative electrode active material or on a surface of the negative electrode, so that fewer ions are stored again in the positive electrode active material; accordingly, the potential of the positive electrode active material will not be able to return to the low state. In the end, when the low battery voltage is demanded, the negative electrode potential is increased for a balance, in which case the low potential region of the positive electrode cannot be used sufficiently for charging and discharging.

In view of this, Li is precipitated on the negative electrode first in the recycling method according to this embodiment. At this time, by performing pulse charging and discharging in the low temperature environment, a large amount of Li can be precipitated on the surface of the negative electrode. Since metal lithium is lower in potential than the negative electrode active material, causing the precipitated Li to function as the negative electrode and exchanging Li ions with the positive electrode enable the charging and discharging with the positive electrode in the low potential region.

In the lithium ion secondary battery, Li precipitation on the negative electrode is generally avoided from the viewpoints of reducing the capacity, short-circuiting due to dendrite growth of metal lithium, and the like. Nevertheless, the Li precipitating step is performed first in the recycling method according to the present embodiment due to the aforementioned reason.

### (1) Li precipitating step S101

The lithium ion secondary battery used in the Li precipitating step S101 is desirably the used lithium ion secondary battery; however, the present invention is not limited to this. An unused lithium ion secondary battery that was not shipped because of being evaluated defective in the manufacture may be used. Thus, the material used for the lithium ion secondary battery can be manufactured while the burden on the environment is reduced.

In the Li precipitating step S101, the lithium ion secondary battery is subjected to the pulse charging and discharging in the low temperature environment. The Li precipitating conditions here are, strictly speaking, different depending on the battery design. Therefore, the Li precipitating conditions can be set as appropriate in accordance with the battery design.

Here, Li in an amount of such a degree that the function as the negative electrode is obtained is precipitated on the negative electrode. Li is precipitated more easily as the temperature is lower; thus, when the pulse charging and discharging are performed at room temperature (that is, about 25°C ±10°C) for example, a sufficient amount of Li cannot be precipitated. Therefore, in the recycling method according to this embodiment, the pulse charging is performed in the low temperature environment and accordingly, a sufficient amount of Li can be precipitated.

The temperature in the low temperature environment (that is, the temperature of the pulse charging and discharging) is 10°C or less, desirably 5°C or less, and more desirably 0°C or less. On the other hand, the temperature in the low temperature environment is -30°C or more from the viewpoints of easily obtaining the low temperature, the energy consumption to obtain the low temperature, and the like although there is no particular limitation. Therefore, the low temperature environment is the temperature environment of -30°C to 10°C, desirably the temperature environment of -30°C to 5°C, and more desirably the temperature environment of -30°C to 0°C.

In addition, in order to precipitate metal Li, the pulse charging and discharging are employed as the charging and discharging. Here, the metal Li is precipitated more easily as the charging and discharging rate is higher. Therefore, the current value (that is, current amplitude) when the pulse charging and discharging are performed is 2.5 C to 200 C, desirably 3 C to 150 C, and more desirably 5 C to 100 C although there is no particular limitation as long as Li is precipitated on the negative electrode. It should be noted that 1 C means the current value at which the battery capacity (Ah) predicted based on the theoretical capacity of the positive electrode can be charged in an hour.

In the pulse charging and discharging, the switching time for the charging and discharging (that is, pulse width) is not limited in particular as long as Li is precipitated on the negative electrode and is, for example, 0.01 to 20 seconds and desirably 0.1 to 10 seconds.

The number of cycles in the pulse charging and discharging is not limited in particular as long as Li is precipitated on the negative electrode and is, for example, 50 cycles or more, desirably 100 cycles or more, more desirably 500 cycles or more, still more desirably 800 cycles or more, and particularly desirably 1000 cycles or more. The number of cycles in the pulse charging and discharging may be 3000 cycles or less, 2000 cycles or less, or 1500 cycles or less.

The state of charge (SOC) of the lithium ion secondary battery when the pulse charging and discharging are performed is not limited in particular as long as the aforementioned pulse charging and discharging can be performed. The SOC of the lithium ion secondary battery may be in the range of 1% to 99%, 10% to 90%, 50% or less, or 30% or less.

The Li precipitating step S101 can be performed by placing the lithium ion secondary battery in a low temperature incubator, a low-temperature thermostatic chamber, or the like, and by using a charging device such as a known charger for the lithium ion secondary battery.

### (2) Active material breaking step S102

In the active material breaking step S102, a charging and discharging treatment, which is different from that in the Li precipitating step S101, is performed. In the active material breaking step S102, the positive electrode active material is broken by repeatedly charging and discharging the lithium ion secondary battery in the range where the positive electrode is in the low potential region.

The charging and discharging conditions are different depending on the battery design, and accordingly can be set as appropriate in accordance with the battery design. The range of the low potential region of the positive electrode is the range where the positive electrode potential (based on lithium) is 3.7 V (vs Li⁺/Li) or less. Specifically, for example, the upper limit of the voltage at the charging is the voltage at which the positive electrode potential becomes 3.7 V (vs Li⁺/Li). On the other hand, the lower limit of the voltage at the discharging is set to the voltage at which the potential of the positive electrode falls within the range of 1.5 V (vs Li⁺/Li) to 3.0 V (vs Li⁺/Li) (for example 1.5 V (vs Li⁺/Li), and desirably 2.5 V (vs Li⁺/Li)). Therefore, in the active material breaking step S102, the lithium ion secondary battery is repeatedly charged and discharged with the potential of the positive electrode in the range of 1.5 V (vs Li⁺/Li) to 3.7 V (vs Li⁺/Li), and desirably 2.5 V (vs Li⁺/Li) to 3.7 V (vs Li⁺/Li).

The charging and discharging rate is not limited in particular as long as the positive electrode active material is broken. The charging and discharging rate is usually very low because the positive electrode has high resistance. The current value in the charging and discharging is, for example, 0.001 C to 0.1 C, desirably 0.005 C to 0.05 C, and more desirably 0.005 C to 0.02 C.

By repeating the charging and discharging in the low potential region of the positive electrode as described above, the positive electrode active material can be broken with the use of the change in crystal size due to the intercalation and deintercalation of Li to and from the positive electrode active material. The number of cycles in this charging and discharging is not limited in particular as long as the positive electrode active material is broken. The positive electrode active material can be broken by about five cycles of charging and discharging. Therefore, the number of cycles in the charging and discharging is 5 cycles or more, desirably 7 cycles or more, and more desirably 10 cycles or more.

The temperature condition in the active material breaking step S102 is not limited in particular. The active material breaking step S 102 may be performed at room temperature (for example, about 25°C ±10°C).

The active material breaking step S102 can be performed using a charging device such as a known charger.

In a case where the crystal structure of the positive electrode active material is a layered structure, it is very easy to break the positive electrode active material by the active material breaking step S102. As the positive electrode active material, a lithium nickel cobalt manganese composite oxide and a lithium nickel cobalt aluminum composite oxide are desirable, and a lithium nickel cobalt manganese composite oxide is particularly desirable. In addition, the negative electrode active material may be graphite.

By performing the Li precipitating step S101 and the active material breaking step S 102 described above, the positive electrode active material can be broken and miniaturized in the lithium ion secondary battery. Thus, the miniaturization leads to the decrease in particle diameter and/or the increase in surface area of the positive electrode active material, and because of this, the implementation efficiency of the subsequent steps (that is, steps for recycling) can be improved. For example, in the case of performing the step of leaching the metal component from the black mass into acid, the metal component can be dissolved faster, which improves the implementation efficiency of this step. In addition, the miniaturization of the positive electrode active material makes it easier to separate the positive electrode active material layer and the positive electrode core body from each other, which improves the amount of collecting the black mass and the collection efficiency of the black mass.

After the Li precipitating step S101 and the active material breaking step S102, known steps are selected and performed as appropriate in accordance with the materials to be recycled; thus, the lithium ion secondary battery can be recycled. In the example shown in FIG. 1, the roasting step S103, the black mass collecting step S104, the acid leaching step S105, and the metal collecting step S106 are performed.

### (3) Roasting step S103

In the roasting step S103, the lithium ion secondary battery after the Li precipitating step S101 and the active material breaking step S102 described above (that is, the lithium ion secondary battery in which the positive electrode active material is broken) is heated at a predetermined temperature. Thus, a liquid component in the lithium ion secondary battery (for example, electrolyte solution or the like) is removed and additionally, a resin component (for example, binder, separator, or the like) can be carbonized. By performing the roasting step S103, the function as the battery can be stopped. Hence, the subsequent steps can be performed safely.

The roasting step S103 can be performed in accordance with the known method. Here, increasing the heating temperature in the roasting step S103 makes it easier for the oxygen element to transfer from the oxide of the valuable metal (for example, transition metal composite oxide or the like) to the carbon material (for example, negative electrode active material or the like). Thus, the valuable metal can be reduced to the metal state. Since the positive electrode active material is miniaturized in the active material breaking step S102, this valuable metal in the metal state is also miniaturized. Therefore, the valuable metal in the metal state can be dissolved at high dissolving speed in the acid leaching step S105 to be described below and the implementation efficiency of the recycling method is improved further.

From the viewpoint of reducing the valuable metal efficiently, the heating temperature in the roasting step S103 is desirably 400°C or more, more desirably 500°C or more, still more desirably 600°C or more, and particularly desirably 700°C or more.

On the other hand, from the viewpoint of reducing the valuable metal, the upper limit of the heating temperature is not limited in particular. The heating temperature may be 1500°C or less, 1400°C or less, or 1300°C or less. In consideration of the cost required to increase the temperature, the upper limit of the heating temperature is desirably 1200°C or less, more desirably 1100°C or less, and particularly desirably 1000°C or less.

From the viewpoint of reducing the valuable metal, it is desirable to perform the roasting step S103 in the atmosphere with low oxygen concentration (an oxygen concentration of for example 5 vol% or less, desirably 3 vol% or less, more desirably 1 vol% or less, and particularly desirably 0.1 vol% or less). Therefore, the roasting step S103 is desirably performed in an inert atmosphere such as argon or nitrogen.

### (4) Black mass collecting step S104

In the black mass collecting step S104, the black mass is collected from the lithium ion secondary battery after the roasting step S103. The black mass is a powder body containing the constituent metals of the positive electrode active material, and since the color is usually black, the powder body is called black mass. The black mass collecting step S104 can be performed in accordance with the known method (for example, collecting the powder body by crushing and sieving the lithium ion secondary battery).

For example, in the lithium ion secondary battery 1 illustrated in FIG. 2, the electrode body 20 is accommodated in the case 10. Therefore, first, the case 10 is crushed and then, the electrode body 20 on the inside is further crushed more minutely. The obtained solid content is sieved and the case 10, the positive electrode core body 32, and the negative electrode core body 42 are removed. Thus, the powder body containing the constituent metals of the positive electrode active material (that is, black mass) can be collected. In this manner, by crushing the case 10 and the electrode body 20, the case 10, the positive electrode core body 32, and the negative electrode core body 42 can be removed easily, the contents of impurities (Al, Cu, and the like) in the black mass can be reduced easily, and the collection efficiency for the valuable metals (Li, Co, Ni, Mn, and the like) can be improved. In the recycling method according to this embodiment, by miniaturing the positive electrode active material in the active material breaking step S102, the valuable metals in the metal state generated in the roasting step S103 are also miniaturized. Therefore, the sieving efficiency is improved. Accordingly, the implementation efficiency is improved in the recycling method according to this embodiment. By allowing the positive electrode active material to be miniaturized, the positive electrode active material layer is easily separated from the positive electrode core body; therefore, the amount of collecting the black mass and the collection efficiency of the black mass are also improved.

It should be noted that in the black mass collecting step S104, it is not necessary to separate completely the impurities such as Al and Cu from the black mass. Even if the black mass contains such impurities, the impurities can be removed in the subsequent steps (acid leaching step S105, metal collecting step S106, etc.), which will be described in detail below. Therefore, in the recycling method for a lithium ion secondary battery according to this embodiment, the black mass collecting step S104 can be omitted.

### (5) Acid leaching step S105

In the acid leaching step S105, the black mass obtained in the black mass collecting step S104 is immersed in an acid solution. Thus, an acid leachate in which the metal components in the black mass (Li, Ni, Co, Mn, Cu, Al, and the like) are dissolved in the acid solution can be prepared. On the other hand, since carbon in the black mass does not dissolve in the acid solution, the carbon is precipitated as a residue. Thus, the carbon can be removed.

The acid leaching step S105 can be performed in accordance with the known method. As one example, the pH of the acid solution is desirably -1.5 to 1.5 (more desirably, -0.5 to 0.5). Thus, the metal components in the black mass can be dissolved suitably. Specific examples of the acid solution include inorganic acids such as sulfuric acid, nitric acid, chloric acid, and phosphoric acid, organic acids such as citric acid, ascorbic acid, oxalic acid, and acetic acid, and the like. In the acid leaching step S105, it is desirable to filter the acid leachate after the acid leaching. Thus, the components that are not dissolved (in particular, carbon component) can be removed efficiently. It should be noted that the temperature of the acid solution is desirably 50°C or more (more desirably 55°C or more, particularly desirably 60°C or more). Thus, the time required for the acid leaching step S105 can be shortened. The upper limit temperature of the acid solution is not limited in particular and may be 90°C or less, 85°C or less, or 80°C or less.

In the recycling method according to this embodiment, by miniaturizing the positive electrode active material in the active material breaking step S102, the valuable metals in the metal state generated in the roasting step S103 are also miniaturized. Therefore, the valuable metals are increased in specific surface area and the acid leaching speed thereof is increased remarkably. Accordingly, in the recycling method according to this embodiment, the implementation efficiency of the acid leaching is improved. Even when the positive electrode active material is subjected directly to acid leaching, the acid leaching speed is increased largely because the positive electrode active material is miniaturized.

### (6) Metal collecting step S106

In the metal collecting step S106, the constituent metals of the positive electrode active material are separated and collected. As described above, the acid leachate obtained in the acid leaching step S105 contains the metal components such as Li, Al, Cu, Co, Ni, and Mn. In the metal collecting step S106, at least one kind of constituent metal of the positive electrode active material is separated from these metal components. Desirably, each component of these metal components contained in the acid leachate is separated. Thus, the valuable metals can be collected from the acid leachate. It should be noted that in the metal collecting step S106, the conventionally known processing technique that can be used in extracting the metals can be employed without particular limitations.

For example, in the metal collecting step S106 in this embodiment, a neutralizing precipitating step, a Mn extracting step, a Co extracting step, a Ni extracting step, a Li separating step, or the like is performed in accordance with the kind of metal to be collected. These steps are hereinafter described in detail.

### (a) Neutralizing precipitating step

(a) In the neutralizing precipitating step, a neutralizer is added to the acid leachate obtained in the acid leaching step S105. Thus, the precipitate including hydroxide of Al (Al(OH)₃) is precipitated in the acid leachate. As a result, Al in the acid leachate can be removed mostly and Al can be collected. As the neutralizer used in this step, an alkali solution with a pH of 11 to 14 (desirably, a pH of 12 to 14) can be used. Specific examples of the alkali solution include a sodium hydroxide aqueous solution, calcium hydroxide, ammonia, and the like. In this step, it is also desirable to separate the precipitate by filtering the acid leachate. Thus, Al(OH)₃ can be removed efficiently from the acid leachate.

### (b) Mn extracting step

In the Mn extracting step, Mn is extracted from the acid leachate. For example, in this step, an organic solvent (first extraction liquid) with high extractability for Mn and low extractability for Li, Al, Cu, Co, and Ni may be added to the acid leachate. Then, the acid leachate and the first extraction liquid are stirred and suspended. Accordingly, Mn in the acid leachate is dissolved in the first extraction liquid. After that, the these is left to stand until the these are separated into two phases. Thus, a Mn solution in which Mn is dissolved in the first extraction liquid and the acid leachate from which Mn is removed can be obtained. It should be noted that, as the first extraction liquid, a phosphate ester type extracting agent, an oxime type extracting agent, or the like can be used. Specific examples of the phosphate ester type extracting agent include di-(2-ethylhexyl) phosphoric acid (D2EHPA) and the like. Specific examples of the oxime type extracting agent include 2-hydroxy-5-nonylacetophenone oxime (LIX84), 5-dodecyl salicylaldoxime (LIX860), 5-nonyl salicylaldoxime (ACORGA M5640), and the like. The first extraction liquid may be obtained by mixing or diluting these extracting agents.

In addition, in the Mn extracting step, a back extraction treatment may be performed for the Mn solution after the extraction (the first extraction liquid containing Mn). In this back extraction treatment, first, the Mn solution (organic phase) and an acid aqueous solution are mixed under stirring. The mixture is left to stand until the mixture is separated into two phases. Thus, the aqueous Mn solution in which Mn is dissolved in the acid aqueous solution can be obtained. It should be noted that as the acid aqueous solution used in the back extraction treatment, sulfuric acid, chloric acid, and the like (sulfuric acid in particular) are mentioned.

### (c) Co extracting step

In the Co extracting step, Co is extracted from the acid leachate. Specifically, in this step, an organic solvent (second extraction liquid) with high extractability for Co and low extractability for Li, Al, Cu, and Ni may be added to the acid leachate. Thus, Co can be separated from the acid leachate and a Co solution in which Co is dissolved in the second extraction liquid can be obtained. It should be noted that specific examples of the second extraction liquid include phosphonic acid ester such as 2-ethylhexyl 2-ethylhexylphosphate (PC-88A) and the like. In addition, the back extraction treatment may also be performed on the Co solution after the extraction (second extraction liquid containing Co). Thus, an aqueous Co solution can be obtained.

### (d) Ni extracting step

In the Ni extracting step, Ni is extracted from the acid leachate. Specifically, in the step, an organic solvent (third extraction liquid) with high extractability for Ni and low extractability for Li, Al, and Cu is added to the acid leachate. Thus, Ni can be separated from the acid leachate and a Ni solution in which Ni is dissolved in the third extraction liquid can be obtained. It should be noted that specific examples of the third extraction liquid include carboxylic acid type extracting agents such as neodecanoic acid and naphthenic acid, and the like. In addition, the back extraction treatment may also be performed on the Ni solution after the extraction (third extraction liquid containing Ni). Thus, an aqueous Ni solution can be obtained.

### (e) Li separating step

In the case of performing the Mn extracting step, the Co extracting step, the Ni extracting step, and the like described above, Ni, Co, Mn, and the like are removed from the acid leachate; therefore, the main metal components in the acid leachate are Li, Al, and Cu. In the Li separating step, Cu and Al are removed from this acid leachate. It should be noted that Cu and Al may be removed by any method without particular limitations, and a conventionally known method such as a solvent extracting method or an ion exchanging method can be employed as appropriate.

As described above, the constituent metals of the positive electrode active material can be separated and collected from the acid leachate, and Li and Al can also be collected. These collected metals can be used as the materials of the lithium ion secondary battery in accordance with the known method.

For example, the collected constituent metals of the positive electrode active material can be used to manufacture the positive electrode active material in accordance with the known method. Specifically, for example, the positive electrode active material can be manufactured by performing the following crystallizing step and firing step using the collected constituent metals of the positive electrode active material.

### (A) Crystallizing step

In the crystallizing step, a precursor of the positive electrode active material is manufactured using the collected constituent metals of the positive electrode active material. The precursor of the positive electrode active material is typically a hydroxide, and may be a carbonate. The crystallizing step can be performed in accordance with the known method. For example, in the case of manufacturing a lithium nickel cobalt manganese composite oxide as the positive electrode active material, a mixed solution in which the Co solution, the Ni solution, and the Mn solution are mixed is prepared in this crystallizing step. Then, the pH of this mixed solution is controlled so as to be alkaline. Accordingly, the crystal of nickel cobalt manganese composite hydroxide (NCM precursor) is precipitated. In the preparation of the mixed solution, the mixing ratio among the Co solution, the Ni solution, and the Mn solution may be changed as necessary. When the pH is adjusted, the mixed solution may be added dropwise to a reaction vessel together with an alkali solution (ammonia water, sodium hydroxide aqueous solution).

### (B) Firing step

In the firing step, the precursor of the positive electrode active material and a lithium source are mixed and fired. The firing step can be performed in accordance with the known method. Specifically, for example, in the case of manufacturing the lithium nickel cobalt manganese composite oxide as the positive electrode active material, the NCM precursor obtained above and a Li compound (for example, lithium carbonate or the like) are mixed and fired. The Li compound is desirably one obtained by using Li collected in the metal collecting step S106 but is not limited this. By this firing, the positive electrode active material of the lithium ion secondary battery (that is, lithium transition metal composite oxide) can be manufactured.

Using the obtained positive electrode active material, the lithium ion secondary battery can be manufactured in accordance with the known method.

Thus, the recycling method for a lithium ion secondary battery according to this embodiment has been described above. In the recycling method for a lithium ion secondary battery according to this embodiment, the positive electrode active material is miniaturized; therefore, because of the decrease in particle diameter and/or the increase in surface area of the positive electrode active material, the implementation efficiency of the subsequent steps (that is, steps for recycling) can be improved as described above.

### 3. Other embodiments

One embodiment of the recycling method for a lithium ion secondary battery according to the present invention has been described above. The recycling method for a lithium ion secondary battery according to the present invention is not limited to the embodiment described above and includes other embodiments in which various constitutions are changed.

For example, in the recycling method according to the embodiment described above, the active material breaking step S102 is followed by the roasting step S103, the black mass collecting step S104, the acid leaching step S105, and the metal collecting step S106. In the embodiment described above, however, it is not intended to limit the steps after the active material breaking step S102. That is to say, in the recycling method for a lithium ion secondary battery according to the present invention, the step after the active material breaking step S102 can be added/deleted/changed as necessary.

For example, after the active material breaking step S102 is performed, the lithium ion secondary battery may be disassembled, the positive electrode may be removed, and by performing the process on this positive electrode in accordance with the known method, the constituent metals of the positive electrode active material may be collected. Even in this case, the positive electrode active material is miniaturized and thus, the implementation efficiency is improved.

Various steps performed in the metal collecting step S106 are not limited to the neutralizing precipitating step, the Ni extracting step, the Co extracting step, the Mn extracting step, and the Li separating step described above. Moreover, all these steps are not necessarily performed. For example, the battery including the lithium nickel manganese composite oxide as the positive electrode active material hardly contains cobalt (Co). In the case of collecting such a battery, the Co extracting step can be omitted. As described above, the step after the active material breaking step S102 can be changed as appropriate in accordance with the constituent elements of the collection target (battery) and is not limited to a particular step.

### (1) About collection target

The structure of the lithium ion secondary battery used in the recycling method according to the present invention is not limited to the lithium ion secondary battery 1 illustrated in FIG. 2 and FIG. 3. For example, in the aforementioned embodiment, the box-shaped case made of aluminum is used as the exterior body. However, the shape and material of the exterior body are not limited to these. In another example, the exterior body may be a cylindrical case. In still another example, the exterior body may be made of resin. In yet still another example, the exterior body may be a laminated exterior body. This laminated exterior body is formed in such a way that two laminate films are disposed to face each other with the electrode body interposed therebetween and outer peripheral parts of the pair of laminate films are welded together.

### [Test Examples]

Test examples regarding the recycling method for a lithium ion secondary battery according to the present invention will hereinafter be described. It should be noted that the contents of the test examples to be described below do not intend to limit the recycling method for a lithium ion secondary battery according to the present invention.

### 1. Preparation of test battery

In the present test, a predetermined test battery was prepared. The materials of the test battery used in this test will be described below. The test battery in this test employed the lithium nickel cobalt manganese composite oxide (LiNi_{1/3}Co_{1/3}Mn_{1/3}O₂) for the positive electrode active material. For the positive electrode core body, an aluminum foil was used. On the other hand, graphite was used for the negative electrode active material. For the negative electrode core body, a copper foil was used. For the separator, a separator with a three-layer structure of PP/PE/PE was used. For the exterior body, a rectangular case made of aluminum was used. That is to say, the main components of the test battery in this test were Li, Ni, Co, Mn, Cu, Al, and C. The prepared test battery had a voltage of 3.2 V.

### 2. Implementation of charging and discharging

The process about the charging and discharging shown in Table 1 was performed using a thermostat chamber and a charger. Specifically, in Example 1, in a first process, the test battery was placed in the thermostat chamber of -30°C, and charging and discharging with the amplitude (C) and pulse width (second) shown in Table 1 were performed for 1000 cycles (that is, charging at 100 C for 0.1 seconds and discharging at 100 C for 0.1 seconds were repeated 1000 times). In a second process, the test battery was placed under room temperature, and constant-current charging with a current value of 0.01 C up to 3.2 V and constant-current discharging with a current value of 0.01 C to 1 V were repeated for 10 cycles. It should be noted that in the case of a voltage of 3.2 V, the negative electrode potential is 0.5 V (vs Li⁺/Li); therefore, the positive electrode potential based on lithium is 3.7 V (vs Li⁺/Li). In Examples 2 to 7, the processes were performed in a manner similar to Example 1 except that the process conditions were changed to the conditions shown in Table 1. In Comparative Example 1, the cut current was set to 0.1 C and constant-current constant-voltage (CC-CV) discharging was performed to 0 V. In Comparative Example 2, constant-current (CC) discharging at 5 C was performed for 0.02 seconds. In Comparative Example 3, the same pulse charging and discharging as that in the first process in Example 1 was performed and then, the same constant-current constant-voltage discharging as that in the first process in Comparative Example 1 was performed.

### 3. Implementation of subsequent step

Next, the test battery after the aforementioned processes was heated (roasted) in an electric furnace at 800°C. Next, the exterior body was crushed. The crushed object was sieved, so that the black mass was collected and the weight was measured. In accordance with (weight of collected black mass/designed weight) × 100, the collection rate (%) of the black mass was calculated. The results are shown in Table 1.

Into sulfuric acid, 100 g of the black mass that was measured was immersed, so that acid leaching was performed. As the index of the dissolving speed, the time until the metal components disappeared was measured by visual observation. The results are shown in Table 1.

### [Table 1]

**Table 1**

| | First process | Second process | BM collection rate (%) | BM dissolving hours (hr) |
|---|---|---|---|---|
| Comparative Example 1 | CCCV discharging | None | 85 | 6 |
| | 0V, 0.1C cut | | | |
| Comparative Example 2 | CC discharging | None | 87 | 6 |
| | 5C, 0.02 sec | | | |
| Comparative Example 3 | Pulse charging and discharging | CCCV discharging | 82 | 6 |
| | 100C, 0.1 sec, 1000 cycles, -30°C | 0V, 0.1C cut | | |
| Example 1 | Pulse charging and discharging | Cycle CC charging and discharging | 96 | 2 |
| | 100C, 0.1sec, 1000 cycles, -30°C | 1V-3.2V, 0.01C, 10 cycles | | |
| Example 2 | Pulse charging and discharging | Cycle CC charging and discharging | 95 | 2.5 |
| | 50C, 10sec, 100 cycles, -10°C | 1V-3.2V, 0.01C, 10 cycles | | |
| Example 3 | Pulse charging and discharging | Cycle CC charging and discharging | 95 | 2.5 |
| | 20C, 10sec, 500 cycles, 0°C | 1V-3.2V, 0.01C, 10 cycles | | |
| Example 4 | Pulse charging and discharging | Cycle CC charging and discharging | 95 | 2.5 |
| | 5C, 10sec, 500 cycles, 0°C | 1V-3.2V, 0.01C, 10 cycles | | |
| Example 5 | Pulse charging and discharging | Cycle CC charging and discharging | 94 | 2 |
| | 100C, 0.1sec, 1000 cycles, -30°C | 2V-3.2V, 0.01C, 10 cycles | | |
| Example 6 | Pulse charging and discharging | Cycle CC charging and discharging | 86 | 5 |
| | 100C, 0.1sec, 1000 cycles, -30°C | 1V-3.2V, 0.01C, 5 cycles | | |
| Example 7 | Pulse charging and discharging | Cycle CC charging and discharging | 93 | 2.5 |
| | 100C, 0.1sec, 1000 cycles, -30°C | 1V-3.2V, 0.01C, 7 cycles | | |

In Table 1, the first process in Examples 1 to 7 and Comparative Example 3 (that is, pulse charging and discharging) was performed under charging and discharging conditions where lithium is precipitated on the negative electrode. In addition, the second process in Examples 1 to 7 was performed under charging and discharging conditions where the positive electrode active material is broken. As indicated by the results in Table 1, in the case of performing the pulse charging and discharging on the test battery under the low temperature environment so that Li is precipitated on the negative electrode and repeating the charging and discharging on the test battery in the range where the positive electrode is in the low potential region so that the positive electrode active material is broken (that is, in Examples 1 to 7), the dissolving speed of the black mass is improved. In addition, it is indicated that the collection rate of the black mass is also increased.

Thus, it is understood that the implementation efficiency can be improved by the recycling method for a lithium ion secondary battery according to the present invention.

The specific examples of the present invention have been described above in detail; however, these are examples and will not limit the scope of claims.
to [8], further including: the roasting step of heating the lithium ion secondary battery after the active material breaking step at the predetermined temperature; the black mass collecting step of collecting the black mass including the constituent metal of the positive electrode active material from the lithium ion secondary battery after the roasting step; the acid leaching step of immersing the obtained black mass in the acid solution to obtain the acid leachate including the constituent metal of the positive electrode active material; and the metal collecting step of separating and collecting the constituent metal of the positive electrode active material from the acid leachate.

## Claims

1. A recycling method for a lithium ion secondary battery (1), comprising:
a Li precipitating step (S101) of performing pulse charging and discharging on a lithium ion secondary battery (1) in a low temperature environment so that Li is precipitated on a negative electrode (40); and
an active material breaking step (S102) of repeatedly charging and discharging the lithium ion secondary battery (1), in a range where a positive electrode (30) is in a low potential region so that a positive electrode active material is broken, wherein
the low temperature environment is a temperature environment of -30°C to 10°C,
at the pulse charging and discharging, a current value is 2.5 C to 200 C,
in the active material breaking step (S102), the lithium ion secondary battery (1) is repeatedly charged and discharged in a range where the positive electrode (30) has a potential of 1.5 V (vs Li⁺/Li) to 3.7 V (vs Li⁺/Li), and
in the active material breaking step (S102), the lithium ion secondary battery (1) is charged and discharged for five cycles or more.

2. The recycling method for a lithium ion secondary battery (1) according to claim 1, wherein the low temperature environment is a temperature environment of -30°C to 0°C.

3. The recycling method for a lithium ion secondary battery (1) according to claim 1, wherein at the pulse charging and discharging, a current value is 3 C to 150 C.

4. The recycling method for a lithium ion secondary battery (1) according to claim 1, wherein at the pulse charging and discharging, a switching time for the charging and discharging is 0.01 to 20 seconds.

5. The recycling method for a lithium ion secondary battery (1) according to claim 1, wherein in the active material breaking step (S102), the current value in the charging and discharging is 0.001 C to 0.1 C.

6. The recycling method for a lithium ion secondary battery (1) according to claim 1, wherein a crystal structure of the positive electrode active material is a layered structure.

7. The recycling method for a lithium ion secondary battery (1) according to claim 1, wherein the positive electrode active material is a lithium nickel cobalt manganese composite oxide.

8. The recycling method for a lithium ion secondary battery (1) according to claim 1, wherein the negative electrode (40) contains graphite as a negative electrode active material.

9. The recycling method for a lithium ion secondary battery (1) according to claim 1, further comprising:
a roasting step (S103) of heating the lithium ion secondary battery (1) after the active material breaking step (S102) at a predetermined temperature;
a black mass collecting step (S104) of collecting black mass including a constituent metal of the positive electrode active material from the lithium ion secondary battery (1) after the roasting step (S103);
an acid leaching step (S105) of immersing the obtained black mass in an acid solution to obtain an acid leachate including the constituent metal of the positive electrode active material; and
a metal collecting step (S106) of separating and collecting the constituent metal of the positive electrode active material from the acid leachate.

## Patentansprüche

1. Verfahren zur Wiederaufbereitung einer Lithium-Ionen-Sekundärbatterie (1), umfassend:
einen Li-Ausfällungsschritt (S101), bei dem an einer Lithium-Ionen-Sekundärbatterie (1) in einer Umgebung mit niedriger Temperatur ein Pulsladen und Pulsentladen durchgeführt wird, so dass Li an einer negativen Elektrode (40) ausgefällt wird; und
einen Schritt (S102) zum Aufbrechen des aktiven Materials, bei dem die Lithium-Ionen-Sekundärbatterie (1) wiederholt geladen und entladen wird, und zwar in einem Bereich, in dem sich eine positive Elektrode (30) in einem Bereich mit niedrigem Potential befindet, so dass das aktive Material der positiven Elektrode aufgebrochen wird, wobei
die Umgebung mit niedriger Temperatur eine Temperaturumgebung von -30 °C bis 10 °C ist, beim Pulsladen und Pulsentladen ein Stromwert von 2,5 C bis 200 C vorliegt,
im Schritt zum Aufbrechen des aktiven Materials (S102) die Lithium-Ionen-Sekundärbatterie (1) wiederholt in einem Bereich geladen und entladen wird, in dem die positive Elektrode (30) ein Potential von 1,5 V (vs. Li⁺/Li) bis 3,7 V (vs. Li⁺/Li) aufweist, und
im Schritt zum Aufbrechen des aktiven Materials der positiven Elektrode (S102) die Lithium-Ionen-Sekundärbatterie (1) für fünf Zyklen oder mehr geladen und entladen wird.

2. Verfahren zur Wiederaufbereitung einer Lithium-Ionen-Sekundärbatterie (1) nach Anspruch 1, wobei die Umgebung mit niedriger Temperatur eine Temperaturumgebung von -30 °C bis 0 °C ist.

3. Verfahren zur Wiederaufbereitung einer Lithium-Ionen-Sekundärbatterie (1) nach Anspruch 1, wobei beim Pulsladen und Pulsentladen ein Stromwert von 3 C bis 150 C vorliegt.

4. Verfahren zur Wiederaufbereitung einer Lithium-Ionen-Sekundärbatterie (1) nach Anspruch 1, wobei beim Pulsladen und Pulsentladen eine Umschaltzeit für das Laden und Entladen 0,01 bis 20 Sekunden beträgt.

5. Verfahren zur Wiederaufbereitung einer Lithium-Ionen-Sekundärbatterie (1) nach Anspruch 1, wobei im Schritt zum Aufbrechen des aktiven Materials (S102) der Stromwert beim Laden und Entladen 0,001 C bis 0,1 C beträgt.

6. Verfahren zur Wiederaufbereitung einer Lithium-Ionen-Sekundärbatterie (1) nach Anspruch 1, wobei eine Kristallstruktur des aktiven Materials der positiven Elektrode eine Schichtstruktur aufweist.

7. Verfahren zur Wiederaufbereitung einer Lithium-Ionen-Sekundärbatterie (1) nach Anspruch 1, wobei das aktive Material der positiven Elektrode ein Lithium-Nickel-Kobalt-Mangan-Verbundoxid ist.

8. Verfahren zur Wiederaufbereitung einer Lithium-Ionen-Sekundärbatterie (1) nach Anspruch 1, wobei die negative Elektrode (40) Graphit als aktives Material der negativen Elektrode enthält.

9. Verfahren zur Wiederaufbereitung einer Lithium-Ionen-Sekundärbatterie (1) nach Anspruch 1, das ferner umfassend ist:
einen Röstschritt (S103), bei dem die Lithium-Ionen-Sekundärbatterie (1) nach dem Schritt (S102) zum Aufbrechen des aktiven Materials auf eine vorbestimmte Temperatur erwärmt wird;
einen Schritt (S104) zum Gewinnen von Schwarzmasse, bei dem Schwarzmasse, die einen Metallbestandteil des aktiven Materials der positiven Elektrode umfasst, nach dem Röstschritt (S103) aus der Lithium-Ionen-Sekundärbatterie (1) gewonnen wird;
einen Säureauslaugungsschritt (S105), bei dem die gewonnene Schwarzmasse in eine Säurelösung eingetaucht wird, um ein Säureauslaugungsprodukt zu erhalten, das den Metallbestandteil des aktiven Materials der positiven Elektrode umfasst; und
einen Schritt (S106) zum Gewinnen von Metall, bei dem der Metallbestandteil des aktiven Materials der positiven Elektrode aus dem Säureauslaugungsprodukt abgetrennt und gewonnen wird.

## Revendications

1. Un procédé de recyclage d'une batterie secondaire au lithium-ion (1), comprenant :
une étape de précipitation du lithium (S101) consistant à effectuer une charge et une décharge par impulsions sur une batterie secondaire au lithium-ion (1) dans un environnement à basse température, de manière à précipiter du lithium sur une électrode négative (40) ; et
une étape de rupture du matériau actif (S102) consistant à charger et décharger de manière répétée la batterie secondaire au lithium-ion (1), dans une plage où l'électrode positive (30) se trouve dans une région de faible potentiel, de manière à fragmenter le matériau actif de l'électrode positive, dans lequel
l'environnement à basse température correspond à une plage de températures de -30 °C à 10 °C,
lors de la charge et de la décharge par impulsions, l'intensité du courant est de 2,5 C à 200 C,
au cours de l'étape de rupture du matériau actif (S102), la batterie secondaire au lithium-ion (1) est chargée et déchargée de manière répétée dans une plage où l'électrode positive (30) présente un potentiel de 1,5 V (par rapport à Li⁺/Li) à 3,7 V (par rapport à Li⁺/Li), et
lors de l'étape de rupture du matériau actif (S102), la batterie secondaire au lithium-ion (1) est chargée et déchargée pendant au moins cinq cycles.

2. Le procédé de recyclage d'une batterie secondaire au lithium-ion (1) selon la revendication 1, dans lequel l'environnement à basse température correspond à une plage de températures de -30 °C à 0 °C.

3. Le procédé de recyclage d'une batterie secondaire au lithium-ion (1) selon la revendication 1, dans lequel, lors de la charge et de la décharge par impulsions, l'intensité du courant est de 3 C à 150 C.

4. Le procédé de recyclage d'une batterie secondaire au lithium-ion (1) selon la revendication 1, dans lequel, lors de la charge et de la décharge par impulsions, la durée de commutation pour la charge et la décharge est de 0,01 à 20 secondes.

5. Le procédé de recyclage d'une batterie secondaire au lithium-ion (1) selon la revendication 1, dans lequel, lors de l'étape de rupture du matériau actif (S102), l'intensité du courant lors de la charge et de la décharge est de 0,001 C à 0,1 C.

6. Le procédé de recyclage d'une batterie secondaire au lithium-ion (1) selon la revendication 1, dans lequel la structure cristalline du matériau actif de l'électrode positive est une structure en couches.

7. Le procédé de recyclage d'une batterie secondaire au lithium-ion (1) selon la revendication 1, dans lequel le matériau actif de l'électrode positive est un oxyde composite de lithium, de nickel, de cobalt et de manganèse.

8. Le procédé de recyclage d'une batterie secondaire au lithium-ion (1) selon la revendication 1, dans lequel l'électrode négative (40) contient du graphite en tant que matériau actif de l'électrode négative.

9. Le procédé de recyclage d'une batterie secondaire au lithium-ion (1) selon la revendication 1, comprenant en outre :
une étape de calcination (S103) consistant à chauffer la batterie secondaire au lithium-ion (1) après l'étape de rupture du matériau actif (S102) à une température prédéterminée ;
une étape de récupération de la masse noire (S104) consistant à récupérer, à partir de la batterie secondaire au lithium-ion (1) après l'étape de calcination (S103), la masse noire comprenant un métal constitutif du matériau actif de l'électrode positive ;
une étape de lixiviation acide (S105) consistant à immerger la masse noire obtenue dans une solution acide afin d'obtenir un lixiviat acide contenant le métal constitutif de la matière active de l'électrode positive ; et
une étape de récupération du métal (S106) consistant à séparer et à récupérer le métal constitutif de la matière active de l'électrode positive à partir du lixiviat acide.
